# EUROPÄISCHE PATENTSCHRIFT

(11) **EP 0 464 335 B1**
(45) Veröffentlichungstag und Bekanntmachung des Hinweises auf die Patenterteilung: **31.08.1994**
(21) Anmeldenummer: 91107086.0
(22) Anmeldetag: 02.05.1991
(51) Int. Cl.: B23B 31/08, B23Q 1/00, B23B 29/24, B23B 31/22

(54) **Schnellwechselfutter mit Längenausgleichsvorrichtung und achszentraler Kühlmittelzuführung**
Quick-change toolholder with length correcting device and axial duct for refrigeration fluid
Porte-outil à changement rapide avec dispositif de correction de la longeur et amenée axiale de fluide de refroidissement

(30) Priorität: 21.06.1990 DE 4019760
(43) Veröffentlichungstag der Anmeldung: 08.01.1992
(73) Patentinhaber: Emuge-Werk Richard Glimpel Fabrik für Präzisionswerkzeuge (vormals Moschkau & Glimpel), D-91207 Lauf (DE)
(72) Erfinder: Glimpel, Helmut, W-8560 Lauf (DE); Kazda, Thomas, W-8564 Hartenstein (DE); Hofmann, Manfred, W-8560 Lauf (DE)
(74) Vertreter: Matschkur, Götz, Lindner Patent- und Rechtsanwälte

(56) Entgegenhaltungen:
- EP-A- 0 333 923
- EP-A- 0 350 725
- DE-A- 3 902 559
- DE-U- 8 623 696
- DE-U- 8 905 254
- US-A- 4 752 088

## Beschreibung

Die Erfindung bezieht sich auf ein Schnellwechselfutter mit einem achszentralen Kühlmittelkanal und einer Längenausgleichsvorrichtung, bei der der Futterkörper gegen die Wirkung einer Rückholfeder bzw. Druckfeder gegenüber dem Futterschaft ausziehbar und eindrückbar ist (siche z.B. US-A-4 752 088).

Bei derartigen Gewindeschneidfuttern ergibt sich die Schwierigkeit, daß sich durch die Längenausgleichsvorrichtung eine Volumenänderung des Kühlmittel-Hydraulikraums ergibt. Ist die Längenausgleichsvorrichtung ausgezogen und liegt somit ein erhöhtes inneres Volumen für das Kühlmittel vor, so genügt häufig die Kraft der Rückholfeder nicht mehr, das ausgezogene Teil gegen den Druck der Kühlflüssigkeit im Hydraulikraum zurückzuholen, so daß es beim Weitertakten zur nächsten Bearbeitungsstation Bruch ergibt, da das Werkzeug ja weiter vorsteht, als es für die Taktbewegung vorgesehen ist.

Der Erfindung liegt daher die Aufgabe zugrunde, ein Schnellwechselfutter der eingangs genannten Art so auszugestalten, daß bei einfachem störunanfälligem Aufbau selbst bei extrem hohen Drücken die Gefahr eines Hängenbleibens des Futterkörpers aufgrund des Kühlmitteldruckeinflusses sicher vermieden ist.

Zur Lösung dieser Aufgabe ist bei einem Schnellwechselfutter der oben genannten Art erfindungsgemäß vorgesehen, daß der Kühlmittelkanal ein mit dem Futterkörper fest verbundenes, am inneren Ende verschlossenes Kühlmittelrohr enthält, das im Futterschaft gleitend verschiebbar gelagert ist und zwischen zwei beabstandeten Gleit-Dichtungen mit einer seitlichen Kühlmitteleintrittsöffnung versehen ist.

Durch diese erfindungsgemäße Ausbildung, bei der bevorzugt die Gleitdichtungen O-Ringe sind, die an beiden Enden einer das Kühlmittelrohr mit Spiel umgebenden Bohrung des Futterschafts angeordnet sind, ergibt sich ein geschlossenes unveränderliches Volumen des gesamten Kühlmittelkanals im Innern des Schnellwechselfutters, unabhängig von der Verschiebung des Futterkörpers gegenüber dem Futterschaft. Damit entfällt dann auch eine Wirkung des Kühlmitteldrucks als Sperrkraft zwischen Futterkörper und Futterschaft, so daß dieser Kühlmitteldruck die Rückholfeder in keiner Weise in ihrer Wirkung beeinträchtigen kann.

Mit besonderem Vorteil kann dabei weiter vorgesehen sein, daß am Boden der Einsatzhülse des Futterkörpers ein Dichtring mit einer umlaufenden Dichtlippe angeordnet ist, die sich an den Schaft des Einsatzes anlegt und somit unter Ermöglichung eines relativ großen axialen Verschiebespiels zwischen Schaft und Einsatzhülse eine dichtende Anlage unter Verhinderung eines Austritts von Kühlmittel seitlich neben dem Schaft gewährleistet. Durch zweckentsprechende Ausbildung der nach innen geneigten Dichtlippe wird diese jeweils durch den Druck des Kühlmittels fest an den Schaft angedrückt, so daß durch entsprechende Verlängerung der Dichtlippe eine Vergrößerung des überbrückbaren axialen Spiels erreicht werden kann.

Herkömmliche Schnellwechselfutter sind meist mit einer Rastkugelkupplung zwischen dem Einsatz und dem Futterkörper versehen, bei der Querbohrungen der Einsatzhülse durchsetzende Rastkugeln sich an einem die Einsatzhülse umgebenden Arretier-Ring abstützen und durch axiale Relativverschiebung von Einsatzhülse und Arretier-Ring radial nach außen in Freigabetaschen des Arretier-Rings ausweichen können. Bei den herkömmlichen Futtern ist der Arretier-Ring Teil des Futterschafts, so daß zum Lösen der Rastkugeln der gesamte Futterkörper entgegen der starken Feder des Längenausgleichs in den Futterschaft eingedrückt werden mußte, damit die Rastkugeln in den Bereich der Freigabetaschen gelangen und nach außen ausweichen können. Durch den Flüssigkeitsdruck der Kühlflüssigkeit entsteht dabei zusätzlich eine Radialkraft auf die Rastkugeln, die sie an die Wand des Rings so stark anpreßt, daß die dadurch resultierende hohe Reibung in Verbindung mit der starren Feder das Zurückdrücken in der Praxis einfach häufig unmöglich gemacht hat bzw. beim Wirken des Längenausgleichs zusätzlich zur Federkraft noch unbeabsichtigt hohe Reibkräfte addiert.

Um diese Schwierigkeiten bei Schnellwechselfuttern gemäß Anspruch 1 zu vermeiden, ist in weiterer Ausgestaltung der Erfindung vorgesehen, daß der Arretier-Ring ein separates, vom Futterkörper und Futterschaft getrenntes Bauteil ist, das auf dem Futterkörper gelagert und gegen eine Druckfeder nach hinten verschiebbar ist.

Durch diese Ausbildung ist die Rückstellfeder für den Arretier-Ring nicht mehr die notwendigerweise sehr starke Rückholfeder der Längenausgleichsvorrichtung, sondern man kann eine sehr viel weichere Feder vorsehen, die ja nur das selbsttätige Verschieben des Arretier-Rings gegenüber der Futterhülse verhindert.

Weitere Vorteile, Merkmale und Einzelheiten eines Ausführungsbeispiels der Erfindung ergeben sich aus der nachfolgenden Beschreibung eines Ausführungsbeispiels sowie anhand der Zeichnung. Dabei zeigen:

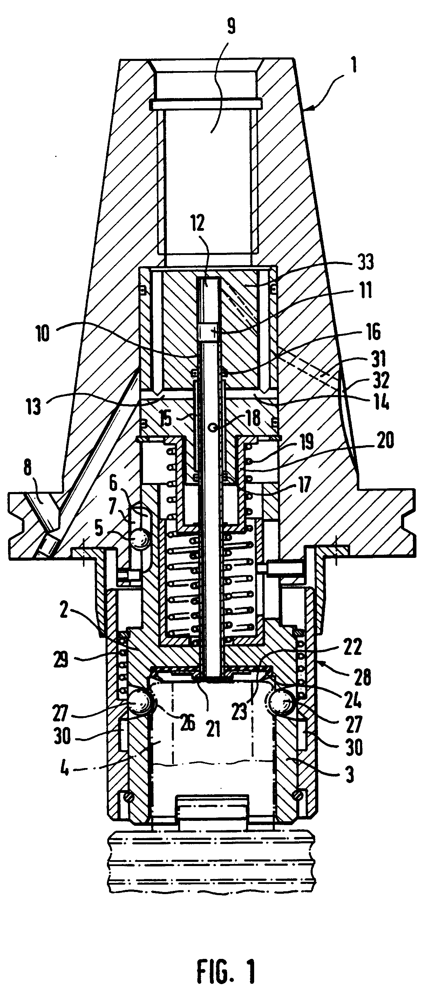

- Fig. 1: einen Schnitt durch ein Schnellwechselfutter mit einem nur schematisch angedeuteten Gewindeschneideinsatz in der Arbeitsstellung, und

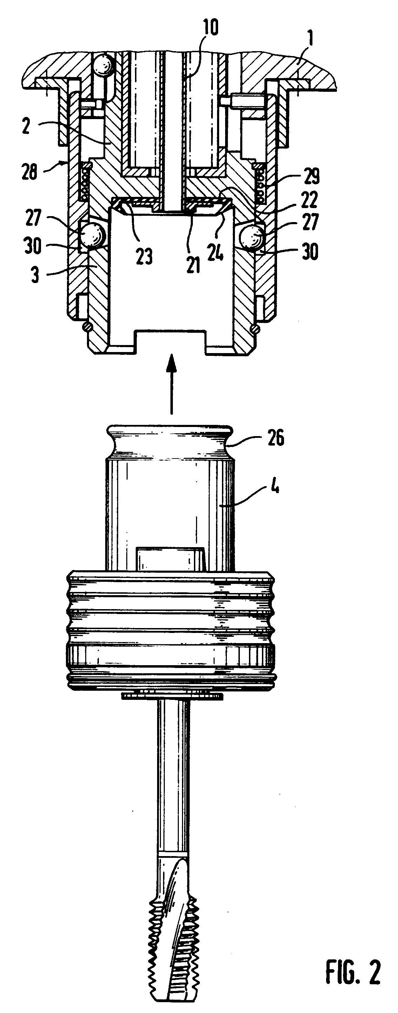

- Fig. 2: einen der Fig. 1 entsprechenden Schnitt bei durch Verschiebung des Arretier-Rings entriegeltem und herausgezogenem Gewindeschneideinsatz.

Das gezeigte Schnellwechselfutter umfaßt einen Futterschaft 1 und einen axial gegenüber diesem verschiebbar gelagerten Futterkörper 2 mit der vorderen Einsatzhülse 3 für den Schaft 4 des Einsatzes, in welchem dann wiederum beispielsweise ein Bohrer oder Gewindeschneidbohrer lösbar gehaltert ist. Die zur Schaffung eines axialen Längenausgleichs dienende axiale Verschiebbarkeit des Futterkörpers gegenüber dem Futterschaft ermöglicht einen selbsttätigen Ausgleich zwischen dem Vorschub des Werkzeugs und der Gewindesteigung des Gewindeschneidbohrers. Die Drehmomentverkupplung zwischen dem Futterschaft und dem Futterkörper bewirken dabei in üblicher Weise Kugeln 5, die in Längsnuten 6 und 7 der beiden gegeneinander verschiebbaren Futterteile 1 und 2 eingreifen. Im dargestellten Ausführungsbeispiel ist der Futterschaft mit zwei wahlweise benutzbaren Kühlmittelzuführungen, und zwar einer seitlichen Kühlmittelzuführung 8 und einer zentralen hinteren Kühlmittelzuführung 9 versehen, wobei selbstverständlich bei der Benutzung einer dieser Zuführungen die andere durch ein zweckentsprechendes Abdichtelement, beispielsweise eine Schraube oder einen Stopfen od.dgl., verschlossen ist. Der innere achs-zentrale Kühlmittelkanal umfaßt ein Kühlmittelrohr 10, welches fest mit dem Futterkörper 2 verbunden ist und im Futterschaft 1 axial verschiebbar ist. Dabei verschiebt sich das hintere Ende des mit einem Verschlußstopfen 11 abgeschlossenen Kühlmittelrohrs mehr oder weniger weit in die Bohrung 12. Innerhalb des Futterschafts 1 mit den seitlichen Kühlmittelzufuhrbohrungen 13 und 14 verläuft das Kühlmittelrohr 10 mit Spiel in einer Bohrung 15, die beidends durch Rundschnurringe 16 bzw. 17 abgedichtet ist. Unabhängig von der Verschiebestellung des mit einer seitlichen Kühlmitteleintrittsöffnung 18 versehenen Kühlmittelrohrs 10 im Futterschaft 1 liegt diese Kühlmitteleintrittsöffnung 18 somit stets zwischen den Dichtstellen 16 und 17 in der mit Kühlmittel gefüllten Bohrung 15, so daß das Kühlmittel in jeder Stellung in die Kühlmitteleintrittsöffnung 18 eintreten kann.

Man erkennt dabei in einfacher Weise, daß bei einer Verschiebung des Futterkörpers 2 nach innen gegenüber dem Futterschaft 1 das innere Volumen des Kühlmittelkanals sich nicht ändert und dabei auch der Kühlmitteldruck nicht als hindernde Kraft für die Verschiebung von Futterkörper und Futterschaft wirksam werden kann. Auf diese Art und Weise kann dieser Kühlmitteldruck auch die Funktion der Rückholfeder 19 nicht beeinträchtigen, die die Anschlagbüchse 20 umgebend den Futterkörper 2 wieder nach hinten in die Ausgangsstellung gegenüber dem Futterschaft 1 zurückholt, wenn aufgrund der gegebenen Längenausgleichsvorrichtung und Änderungen zwischen Vorschub und Gewindesteigung des Bohrers vorher der Futterkörper 2 entsprechend ausgezogen worden war.

Das z.B. mit Hilfe einer Schraube 21 am Boden 22 der Einsatzhülse 3 des Futterkörpers 2 gehalterte Ende des Kühlmittelrohrs 10 wird von einem am Boden der Einsatzhülse angeordneten Dichtring 23 mit einer weichen, schräg nach innen gestellten Dichtlippe 24 umgeben, die sich - verstärkt durch den Druck des Kühlmittels - an den Schaft 4 des Werkzeug-Einsatzes anlegt.

Dieser Schaft 4 des Werkzeug-Einsatzes ist in an sich bekannter Weise mit einer umlaufenden Ringnut 26 versehen, in welche die Einsatzhülse 3 in Bohrungen durchsetzende Rastkugeln 27 eingreifen, die sich außen an einem Arretier-Ring 28 abstützen.

Dieser Arretier-Ring 28 ist ein separates, sowohl vom Futterkörper 2 als auch vom Futterschaft 1 getrenntes Bauteil, welches gleitend verschiebbar gegen die Wirkung einer Druckfeder 29 auf dem Futterkörper 2 verschiebbar ist, damit die Rastkugeln 27 nach außen in die Freigabetaschen 30 des Arretier-Rings gleiten und damit den Schaft 4 freigeben können.

Bei 31 und 32 ist schließlich noch eine Entlüftung (Leckage) für das Kühlmittelsystem angedeutet.

## Patentansprüche

1. Schnellwechselfutter mit einem achs-zentralen Kühlmittelkanal und einer Längenausgleichsvorrichtung, bei der der Futterkörper (2) gegen die Wirkung einer Rückholfeder (19) gegenüber dem Futterschaft (1) ausziehbar ist, dadurch gekennzeichnet, daß der Kühlmittelkanal ein mit dem Futterkörper (2) fest verbundenes, am inneren Ende (11) verschlossenes Kühlmittelrohr (10) enthält, das im Futterschaft (1) gleitend verschiebbar gelagert ist und zwischen zwei beabstandeten Gleit-Dichtungen (16, 17) mit einer seitlichen Kühlmitteleintrittsöffnung (18) versehen ist.

2. Schnellwechselfutter nach Anspruch 1, dadurch gekennzeichnet, daß die Gleit-Dichtungen (16, 17) z.B. O-Ringe sind, die an beiden Enden einer das Kühlmittelrohr (10) mit Spiel umgebenden Bohrung (15) der mit dem Futterschaft (1) verbundenen Kühlmittelzuführungsbüchse (33) angeordnet sind.

3. Schnellwechselfutter nach Anspruch 1 oder 2, gekennzeichnet durch einen am Boden (22) der Einsatzhülse (3) des Futterkörpers (2) angeordneten Dichtring (23) mit einer umlaufenden, sich an den Schaft (4) des Einsatzes anlegenden Dichtlippe (24).

4. Schnellwechselfutter nach einem der Ansprüche 1 bis 3, mit einer Rastkugelkupplung zwischen dem Einsatz und dem Futterkörper (2), bei der Querbohrungen der Einsatzhülse durchsetzende Rastkugeln (27) sich an einem, die Einsatzhülse (3) umgebenden Arretier-Ring (28) abstützen und durch axiale Relativverschiebung von Einsatzhülse und Arretier-Ring radial nach außen in Freigabetaschen des Arretier-Rings ausweichen können, dadurch gekennzeichnet, daß der Arretierring (28) mit Futterkörper (2) gegenüber Futterschaft (1) ein getrenntes Bauteil ist, wobei der Futterkörper unabhängig vom Kühlmitteldruck um den Längenausgleichsweg nach hinten und vorne verschiebbar ist.

## Claims

1. Quick-change tool chuck having an axial coolant channel and a length adjusting device, in which the chuck body (2) is capable of being extended from the chuck shank (1) against the action of a restoring spring (19), characterised in that the coolant channel contains a coolant tube (10), which is sealed at the inner end (11), is permanently connected to the chuck body (2), and is slidingly mounted in the chuck shank (1) and is provided with a lateral coolant inlet aperture (18) between two spaced slide seals (16, 17).

2. Quick-change tool chuck according to claim 1, characterised in that the slide seals (16, 17) are O-rings, for example, which are disposed at both ends of a bore (15) surrounding the coolant tube (10) with clearance and located in the coolant feed bush (33) connected to the chuck shank (1).

3. Quick-change tool chuck according to claim 1 or 2, characterised by a sealing ring (23) disposed on the base (22) of the insert sleeve (3) of the chuck body (2), said sealing ring having a continuous sealing lip (24) abutting the shank (4) of the insert.

4. Quick-change tool chuck according to one of claims 1 to 3, having a ball-catch coupling between the insert and the chuck body (2), in which the catch balls (27) penetrating transverse bores of the insert sleeve (3) bear against a stop ring (28) surrounding the insert sleeve (3) and can be deflected radially outwards into release pockets of the stop ring by relative axial displacement of the insert sleeve and the stop ring, characterised in that the stop ring (28) with the chuck body (2) is a separate component from the chuck shank (1), the chuck body being displaceable backwards and forwards by the length adjustment distance, independently of the coolant pressure.

## Revendications

1. Porte-outil à changement rapide comportant un canal de réfrigérant disposé suivant son axe central et un dispositif de compensation de longueur, dans lequel le corps de porte-outil (2) peut être extrait contre l'effet d'un ressort de rappel (19) vis-à-vis de la queue de porte-outil, caractérisé en ce que le canal (2) de réfrigérant comprend un tube de réfrigérant (10) relié au corps de porte-outil (2) par un raccordement fixe et fermé à son extrémité intérieure (11), ce dernier étant disposé dans la queue de porte-outil (1) avec faculté de coulissement à l'intérieur de celle-ci et comportant un orifice d'entrée de réfrigérant ménagé entre deux joints glissants d'étanchéité (16, 17) écartés l'un de l'autre.

2. Porte-outil à changement rapide selon la revendication 1, caractérisé en ce que les joints d'étanchéité glissants (16, 17) sont par exemple des joints toriques disposés aux deux extrémités du tube de réfrigérant (10) et sont entourés avec jeu d'un alésage (15) ayant pour rôle de relier la douille d'amenée de réfrigérant (33) à la queue de porte-outil (1).

3. Porte-outil à changement rapide selon la revendication 1 ou 2, caractérisé en ce que la bague d'étanchéité (23) est disposée sur la partie de fond (22) du manchon d'insertion (3) du corps de porte-outil (2), un joint à lèvre circulant (24) venant s'appliquer à la queue (4) du manchon d'insertion.

4. Porte-outil à changement rapide selon l'une quelconque des revendications 1 à 3, comportant un accouplement d'encliquetage à billes entre le manchon d'insertion et le corps de porte-outil (2), dans lequel des billes d'encliquetage (27) traversant des perçages transversaux du manchon d'insertion prennent appui à une bague d'arrêt (28) entourant le manchon d'insertion et, par coulissement axial, relatif, du manchon d'insertion et de la bague d'arrêt, peuvent s'écarter, vers l'extérieur, dans des poches de libération de la bague d'arrêt, caractérisé en ce que la bague d'arrêt (28) est formée solidairement avec le corps de porte-outil (2) vis-à-vis de la queue de porte-outil (1), d'où il résulte que le corps de porte-outil possède une faculté de déplacement avant et arrière, qui est indépendant de la pression exercée par le réfrigérant du trajet de compensation de longueur.
